(19) **Europäisches Patentamt**

**European Patent Office**

**Office européen des brevets**

(11) **EP 1 328 037 A2**

(12) **EUROPEAN PATENT APPLICATION**

(43) Date of publication:
**16.07.2003 Bulletin 2003/29**

(51) Int Cl.7: **H01M 10/40**

(21) Application number: **02018017.0**

(22) Date of filing: **12.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **10.01.2002 JP 2002003643**

(71) Applicants:
- **Hitachi, Ltd.**
  **Chiyoda-ku, Tokyo 101-8010 (JP)**
- **Shin-Kobe Electric Machinery Co. Ltd.**
  **Tokyo 103-0027 (JP)**

(72) Inventors:
- **Yamaki, Takahiro**
  **Hitachi-shi, Ibaraki 316-0025 (JP)**
- **Kasai, Masahiro**
  **Mito-shi, Ibaraki 310-0912 (JP)**
- **Kumashiro, Yoshiaki**
  **Toride-shi, Ibaraki 302-0013 (JP)**

(74) Representative: **Strehl Schübel-Hopf & Partner**
**Maximilianstrasse 54**
**80538 München (DE)**

(54) **Lithium ion secondary battery**

(57)     The purpose of the present invention is to provide a lithium ion secondary battery having excellent performance in output discharging and regenerative charging when charging and discharging handle heavy loads equivalent to at least 10 C in hour rate.

A lithium ion secondary battery having a cathode, an anode, a separator, lithium salt that supplies at least lithium ion, and nonaqueous electrolyte that includes said lithium salt , which is characterized in that:

the concentration of said lithium salt in said nonaqueous electrolyte of said lithium ion secondary battery is between 0.3 mol/liter and 3.0 mol/liter after conducting a 300 hours of cyclic test of charging and discharging on said lithium ion secondary battery, (in which charging and discharging condition is: a. 10 seconds of discharging with 10 C of hour rate (Rate), + b. 20 seconds of charging with 5 C of hour rate (Rate), + c. giving substantial absence of open circuit period).

FIG. 2

**EP 1 328 037 A2**

**Description**

BACKGROUND OF THE INVENTION

1. Field of the Invention

The present invention relates to a lithium ion secondary battery having a suitable charging and discharging performance under a heavy load as a electrical power source for such as an electric vehicle, an elevator, an electric-powered tool.

2. Prior Art

In late years, the viewpoint of repression of the global warming and air pollution strongly demands reduced emission of carbon dioxide and economized consumption of energy. One of measures to respond these situation, practical application of a lithium ion secondary battery, a fuel cell, and a solar cell are now on study. For example, an electric vehicle that uses a secondary battery as its driving power source and a hybrid electric vehicle that uses a secondary battery jointly with an internal combustion engine like a gasoline engine are focused in the automobile industry.

Secondary batteries are one of the prospective driving power sources for, in addition to said electric vehicles, elevators and electric powered tools, because they require high driving energy on starting and during heavy load operation.

To respond such situations, a secondary battery having an excellent performance that is capable of supplying large amount of electric power within several or about ten seconds is needed.

In a hybrid electric vehicle and an elevator, a regenerative charging, wherein kinetic energy in braking is converted into electrical energy and stored in a secondary battery, is required from the viewpoint of economized energy consumption.

Therefore, the electrical power source for powered equipment mentioned above requires a secondary battery having not only an output discharging performance that can operate a heavy load of at least 10 C in hour rate or equivalent but also an excellent regenerative charging performance that can accept a large amount of electrical power within several or about ten seconds.

As a response to such circumstances, the lithium ion secondary battery is understood to be a promising means as an electrical power source for powered equipment because of the battery's practicability in weight saving and availability in high output of as much as 3 V to 4 V.

In a lithium ion secondary battery, use of composite oxide of transition metal in the cathode, such as lithium cobaltate, lithium nickelate, and lithium manganate, enables the battery to attain higher battery voltages of 3 V to 4 V compared with other type of secondary batteries. By designing the battery to have a property available for about ten seconds of operations of discharging and charging with a heavy load current of 10 C (Rate) in hour rate, said battery becomes the high output secondary battery applicable to such powered equipment. In this specification, 1 C (Rate) is defined as the current that consumes a battery capacity (Ampere-hour) in one hour.

It should be reminded that, in a lithium ion secondary battery that handles large current (heavy load) in charging and discharging, the concentration of the lithium salt in the nonaqueous electrolyte should be controlled below the predetermined value because the drift speed of the lithium ion in a nonaqueous electrolyte is comparatively slow.

TOKUKAIHEI (Unexamined Japanese Publication) 11-297354 has disclosed a high output lithium ion secondary battery that is obtained through controlling the concentration of lithium salt by solving $LiBF_4$ into the nonaqueous solvent in a nonaqueous electrolyte to the rate 2.0 mol/liter to 5.0 mol/liter.

[Problem that the Invention Intends to Solve]

However, the lithium ion secondary battery by the conventional art still has a problem that the battery brings out not its inherent property but lowered performances in output discharging and regenerative charging. Various studies by the inventors of the present invention for the reason of this problem have found that repeated charging and discharging with heavy load causes the concentration of lithium salt in the nonaqueous electrolyte to be lowered resulting in a rapid drop in battery voltage under heavy load discharging and sharp rise during heavy load charging.

To date, the concentration of lithium salt in the nonaqueous electrolyte at the manufacturing stage of a lithium ion secondary battery has been studied to attain desired performance of the lithium ion secondary battery in output discharging and regenerative charging.

However, the concentration of lithium salt in a lithium ion secondary battery during operation (under charging and discharging) has been out of consideration, which has left the battery holding inadequacy in the measure against such problem.

## SUMMARY OF THE INVENTION

The purpose of the present invention is to provide a lithium ion secondary battery having excellent performance in output discharging and regenerative charging when charging and discharging handle heavy loads equivalent to at least 10 C in hour rate.

The feature of the present invention to achieve said purpose is as follows.

A lithium ion secondary battery having a cathode, an anode, a separator, lithium salt that supplies at least lithium ion, and nonaqueous electrolyte that includes said lithium salt , which is characterized in that:

[1] The concentration of said lithium salt in said nonaqueous electrolyte of said lithium ion secondary battery is between 0.3 mol/liter and 3.0 mol/liter after conducting a 300 hours of cyclic test of charging and discharging on said lithium ion secondary battery, (in which charging and discharging condition is: a. 10 seconds of discharging with 10 C of hour rate (Rate), + b. 20 seconds of charging with 5 C of hour rate (Rate), + c. giving substantial absence of open circuit period).

[2] The concentration of said lithium salt in said nonaqueous electrolyte of said lithium ion secondary battery is between 0.3 mol/liter and 3.0 mol/liter after conducting a 700 hours of cyclic test of charging and discharging on said lithium ion secondary battery, (in which charging and discharging condition is: a. 10 seconds of discharging with 10 C of hour rate (Rate), + b. 20 seconds of charging with 5 C of hour rate (Rate), + c. giving substantial absence of open circuit period).

[3] The concentration of said lithium salt in said nonaqueous electrolyte of said lithium ion secondary battery is between 0.3 mol/liter and 3.0 mol/liter after conducting a 1500 hours of cyclic test of charging and discharging on said lithium ion secondary battery, (in which charging and discharging condition is: a. 10 seconds of discharging with 10 C of hour rate (Rate), + b. 20 seconds of charging with 5 C of hour rate (Rate), + c. giving substantial absence of open circuit period).

[4] The concentration of said lithium salt in said nonaqueous electrolyte of said lithium ion secondary battery is between 0.3 mol/liter and 3.0 mol/liter after conducting a 700 hours of cyclic test of charging and discharging on said lithium ion secondary battery, (in which charging and discharging condition is: a. 10 seconds of discharging with 10 C of hour rate (Rate), + b. 10 seconds of charging with 10 C of hour rate (Rate), + c. giving substantial absence of open circuit period).

[5] The concentration of said lithium salt in said nonaqueous electrolyte of said lithium ion secondary battery is between 0.3 mol/liter and 3.0 mol/liter after conducting a 700 hours of cyclic test of charging and discharging on said lithium ion secondary battery, (in which charging and discharging condition is: a. 20 seconds of discharging with 5 C of hour rate (Rate), + b. 10 seconds of charging with 10 C of hour rate (Rate), + c. giving substantial absence of open circuit period).

[6] In any one of the above descriptions [1] to [5], the concentration of said lithium salt in said nonaqueous electrolyte is preferred to be between 0.5 mol/liter and 3.0 mol/liter.

[7] In any one of the above descriptions [1] to [5], a workable capacity of said cathode is preferred to be between 0.30 mAh/cm$^2$ and 0.75 mAh/cm$^2$ for the unit area of cathode-to-anode facing.

[8] In any one of the above descriptions [1] to [5], a workable capacity of said anode is preferred to be between 0.30 mAh/cm$^2$ and 0.75 mAh/cm$^2$ for per area of cathode-to-anode facing.

According to the present invention, in a lithium ion secondary battery having a cathode and an anode, a separator that electrically insulates said cathode from anode, and a nonaqueous electrolyte comprised of a lithium salt solved in a nonaqueous solvent, such lithium ion secondary battery that maintains a stable performance in output discharging and regenerative charging for the current range of at least equivalent to 10 C in charging and discharging still after the cyclic test comprising a repetition of a charging/discharging pattern under either heavy load charging or heavy load discharging, or both, becomes practicable by providing a means for ensuring the concentration of lithium salt in the nonaqueous electrolyte of being not less than 0.3 mol/liter and not more than 3.0 mol/liter, preferably not less than 0.5 mol/liter and not more than 3.0 mol/liter.

BRIEF DESCRIPTION OF THE DRAWINGS

Fig. 1 is an example of properties of discharge current and voltage drop to explain the present invention.

Fig. 2 is a partially sectional view of an embodiment of the present invention.

DESCRIPTION OF THE PREFRRED EMBODIMENTS

What is characterized by the present invention in a lithium ion battery comprised of a cathode, an anode, a separator that electrically insulates said cathode from said anode, and nonaqueous electrolyte is: that the cathode of said battery has a cathode material composed of composite oxide of lithium and transition metals, wherein said composite oxide is reversibly capable of intercalated and deintercalated lithium; and that the anode of the same has an anode active material, such as carbon, that reversibly react or intercalated lithium. The characterizing feature further includes a separator that electrically insulates said cathode from said anode and nonaqueous electrolyte that is a solution of lithium salt solved in nonaqueous solvent, which electrochemically combined said cathode and anode.

The charging and discharging develops as lithium ion drift across the nonaqueous electrolyte between the cathode-to-anode. Taking the discharging case as an example, lithium ion in the electrolyte near the cathode interface is inserted into the cathode active material and, at the same time, lithium ion is deintercalated into the electrolyte form the anode active material. As the result of this, a gradient in lithium ion concentration appears across the cathode-to-anode facing causing the lithium ion to drift from the anode to the cathode across the electrolyte according to the mass diffusion. At the same time, electron moves from the anode to the cathode through an external circuitry.

Because this drift speed of the lithium ion originated from the mass diffusion is slow compared to the moving speed of electron, the charging or discharging with a heavy load requires the concentration of the lithium salt in nonaqueous electrolyte to be more than a predetermined value.

Taking the charging case as a further example, intercalation of such lithium ion as exists in the electrolyte near its interface with the cathode into the cathode active material in large quantity causes the concentration of lithium ion in the vicinity of said interface to be greatly lowered. If such concentration of lithium salt is lowered, the concentration of lithium ion required for smooth intercarate reaction of the lithium ion into the cathode active material becomes insufficient. Such situation results in a very low battery voltage while discharging causing a reduced output and, depending on the situation, the discharging itself is required to be ended. These mean the lowering in the discharging performance.

In the heavy load charging, the concentration of lithium ion in the electrolyte near the interface with the anode is likewise greatly lowered. This situation results in a lowered charging efficiency because of excessive rise in the battery voltage, and the charging itself should be ended depending on the situation. These mean the lowering in the charging performance. Therefore, the electrolyte in the lithium ion secondary battery that is to be used under heavy load should be the one such that lithium salt is solved to a certain concentration.

In the past, the concentration of lithium salt in the electrolyte in a lithium ion secondary battery was considered to be unchanging during use although lowering in said concentration due to side reaction that would occur in charging and discharging. At least, it was deemed that such large change in concentration that might affect on the charging and discharging performance under heavy load would not occur. Therefore, regulating the concentration of lithium salt to a proper value at only the manufacturing stage was thought sufficient, and no measurement of the concentration of lithium salt during use, i.e. after manufacture, was conducted.

However, the study results by the inventors of the present invention has found that, for example, ceaseless continuous operation in a pattern comprised of either heavy load charging or heavy load discharging, or both, causes adhesion of the lithium salt onto the element in a battery like the electrode resulting in remarkably low concentration of lithium salt in the electrolyte for heavy load use.

One of the reasons for the accretion of an ingredient in the lithium salt onto the element like electrode is that, taking the discharging stage as an example, large quantity of lithium ion deintercalated from the anode active material into said electrolyte causes some sort of supersaturation of the lithium salt in the electrolyte near the anode-interface. Therefore, the conventional method that controls the concentration of lithium salt at only the manufacturing stage cannot be suitable as the solution of said problem.

Such lowness in the concentration of lithium salt significantly occurs when a cyclic test that repeats charging and discharging in certain pattern which includes charging and discharging of about 10 C or over is conducted. Particularly when the charging and discharging pattern thereof gives substantial absence of open period to the circuitry or when the time length of such open status is shorter, lowering in the salt concentration more develops.

As the pattern for charging and discharging, several styles may be cited, for example: 10 seconds of discharging with 10 C + 10 seconds of charging with 10 C + no time period for open circuit; 20 seconds of discharging with 5 C + 10 seconds of charging with 10 C + no time period for open circuit; and 10 seconds of discharging with 10 C + 20 seconds of charging with 5 C + no time period for open circuit. The lowering in the salt concentration occurs more significantly when the charging and discharging pattern such that the load on discharging is heavier than that on charging is repeated.

In the charging and discharging pattern, both the current and time length in respective charging or discharging should be determined so that the electrical quantity in discharging may become equal to that in charging as much as possible. However, in said cyclic test that repeats such charging and discharging pattern, sum of the electrical quantities in both charging and discharging gradually dissociate from each other depending on the performances or properties of the power source used in the charging and discharging apparatuses employed in the test. In this event, it is preferable to properly apply a means for fine adjustment of current or time length in charging and discharging pattern or to perform a short time adjusting charging or discharging to charge or discharge the electrical quantity equivalent to dissociated quantity.

Now, explanation enters the evaluation procedure for the charging and discharging performance of a lithium ion secondary battery.

To evaluate the charging and discharging performance, it is enough to examine the change in the voltage drop with respect to the voltage before discharging by measuring the voltage drop in discharging within a short time through a heavy load.

For example, the voltage drop in 10 seconds discharging with 10 C is defined as follows. A lithium ion secondary battery having given depth of discharge is discharged, charged, and discharged under a voltage within a predetermined range. Then, the battery is charged to 50 % of the discharging capacity of the second discharging and hold with the circuit open for 30 minutes to stabilize the voltage, wherein the stabilized voltage is expressed as $V_1$. Next, the battery is discharged for 10 seconds with constant current (I) of 10 C to the battery capacity to measure a voltage at the end of said 10 seconds of time. The voltage at that time is taken as $V_2$. The voltage drop in the discharging ($\Delta V$) is determined by the calculation $\Delta V = V_1 - V_2$. The resistance in the discharging (R) is defined by $R = \Delta V/I$, which means that a larger resistance R causes a larger voltage drop $\Delta V$, a poor discharging performance.

When comparison of the voltage drops $\Delta V$ of different batteries or the one at different timing for the same battery is intended, it is preferred to approximate each of the depth of discharge of such batteries to the other depth as much as possible. This approximation may be almost attained by, for example, discharging, charging, then discharging under a voltage within a predetermined range for charging and discharging, which is followed by charging the battery to 50 % of the discharging capacity of the second discharging.

To evaluate the stability of the discharging performance, examining the relationship between the discharging current I and the voltage drop $\Delta V$ (I-V relation) is enough. After 10 seconds of discharging with certain discharging current I, the battery is charged with the equivalent amount to discharged electrical quantity and is retained with the circuit open for 30 minutes, which is followed by a series of measurements changing the discharging current I. In determination of varying the discharging current I, change of currents in the ascending order is preferred. When 10 C of current I is the upper limit for example, the measurement of $\Delta V$ is performed in the discharging order of: 2.5 C, 5 C, 7.5 C, and 10 C.

When plotting $\Delta V$ with respect to each discharging current I determined by the calculation $\Delta V = V_1 - V_2$ shows a proportional relationship, i.e. a linearity, between $\Delta V$ and I, the discharging performance can be understood stable. Alternatively, when a comparison of, for example, the discharging resistance ($R_{2.5C}$) at the discharging current of 2.5 C with the discharging resistance ($R_{10C}$) at the discharging current of 10 C, based on the discharging resistance calculated from $R = \Delta V/I$ on each discharging current I, shows that they are almost same, then the battery is understood having a stable discharging performance.

The charging performance is also examined, in a similar manner for the discharging, by measuring charging current and voltage rise in the charging. Generally, a battery having good performance in the discharging is a battery that has good performance also in the charging. Therefore, measuring either of these performances will be eligible to judge the charging and discharging performance of a lithium ion secondary battery.

Low concentration of the lithium salt in the nonaqueous electrolyte in a lithium ion secondary battery makes above-described I-V property changed.

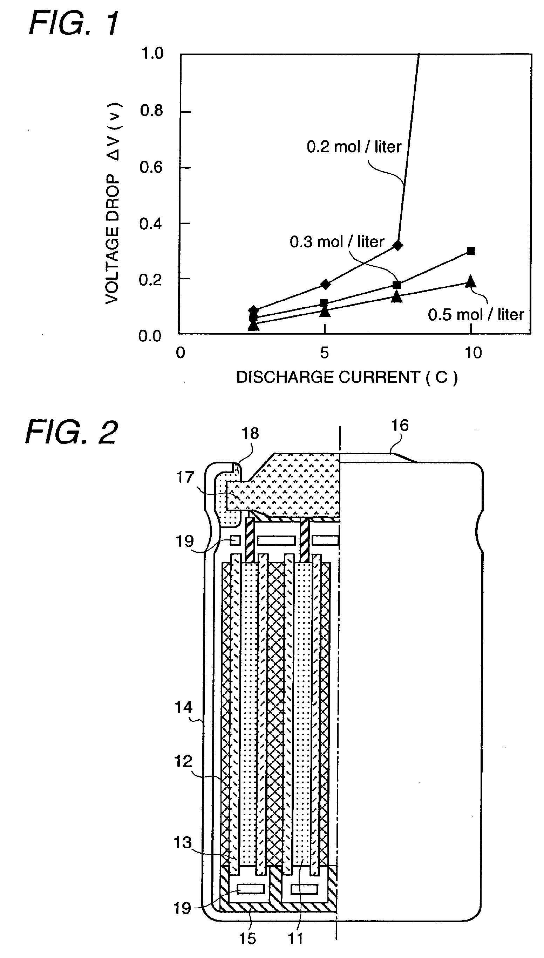

Fig. 1 shows an I-V property of a lithium ion secondary battery for 10 seconds of discharging, wherein the concentrations of lithium salt are 0.5 mol/liter, 0.3 mol/liter, and 0.2 mol/liter. The I-V property where the lithium salt concentration is 0.5 mol/liter shows linearity between the discharging current I and the voltage drop $\Delta V$ telling that they are validly proportional, in which the resistance R is constant regardless of change in the discharging current I.

In contrast to this, where the lithium salt concentration is 0.3 mol/liter, the discharging current I and the voltage drop V are not able to maintain their linearity as far as 10 C of discharging current. Moreover, where the lithium salt concentration is 0.2 mol/liter, the battery voltage reaches the lower limit in the discharging with 10 C before 10 seconds of discharging time resulting in a very poor discharging performance at the 10 C discharge.

On the other hand, when the concentration of lithium salt is over 3.0 mol/liter, output performance and regenerative charging are unacceptable because of the viscosity of the nonaqueous electrolyte increases causing lowered drifting speed of lithium ion in the nonaqueous electrolyte.

The lithium ion secondary battery in the present invention is given, at the manufacturing stage, an electrolyte available for heavy load use and has a means for depressing lowering in the concentration of lithium salt in the nonaqueous electrolyte during the cyclic test wherein an operation in a pattern comprised of either heavy load charging or heavy load discharging, or both, is repeated.

The lithium ion secondary battery in the present invention is a lithium ion secondary battery comprised of a cathode, an anode, a separator that electrically insulates said cathode from said anode, lithium salt that supplies lithium ion, and nonaqueous electrolyte composed of nonaqueous solvent into which said lithium salt is solved and is characterized by the features below-described.

[1] The concentration of said lithium salt in said nonaqueous electrolyte of said lithium ion secondary battery is between 0.3 mol/liter and 3.0 mol/liter after conducting a 300 hours of cyclic test of charging and discharging on said lithium ion secondary battery, (in which charging and discharging condition is: a. 10 seconds of discharging with 10 C of hour rate (Rate), + b. 20 seconds of charging with 5 C of hour rate (Rate), + c. giving substantial absence of open circuit period).

[2] The concentration of said lithium salt in said nonaqueous electrolyte of said lithium ion secondary battery is between 0.3 mol/liter and 3.0 mol/liter after conducting a 700 hours of cyclic test of charging and discharging on said lithium ion secondary battery, (in which charging and discharging condition is: a. 10 seconds of discharging with 10 C of hour rate (Rate), + b. 20 seconds of charging with 5 C of hour rate (Rate), + c. giving substantial absence of open circuit period).

[3] The concentration of said lithium salt in said nonaqueous electrolyte of said lithium ion secondary battery is between 0.3 mol/liter and 3.0 mol/liter after conducting a 1500 hours of cyclic test of charging and discharging on said lithium ion secondary battery, (in which charging and discharging condition is: a. 10 seconds of discharging with 10 C of hour rate (Rate), + b. 20 seconds of charging with 5 C of hour rate (Rate), + c. giving substantial absence of open circuit period).

[4] The concentration of said lithium salt in said nonaqueous electrolyte of said lithium ion secondary battery is between 0.3 mol/liter and 3.0 mol/liter after conducting a 700 hours of cyclic test of charging and discharging on said lithium ion secondary battery, (in which charging and discharging condition is: a. 10 seconds of discharging with 10 C of hour rate (Rate), + b. 10 seconds of charging with 10 C of hour rate (Rate), + c. giving substantial absence of open circuit period).

[5] The concentration of said lithium salt in said nonaqueous electrolyte of said lithium ion secondary battery is between 0.3 mol/liter and 3.0 mol/liter after conducting a 700 hours of cyclic test of charging and discharging on said lithium ion secondary battery, (in which charging and discharging condition is: a. 20 seconds of discharging with 5 C of hour rate (Rate), + b. 10 seconds of charging with 10 C of hour rate (Rate), + c. giving substantial absence of open circuit period).

Additionally to any one of the above descriptions [1] to [5], the concentration of said lithium salt in said nonaqueous electrolyte is preferred to be between 0.5 mol/liter and 3.0 mol/liter.

Several methods are practicable to depress the lowering in the concentration of lithium salt during said cyclic test composed of heavy load charging or heavy load discharging. The method would include depression of rise of the concentration of lithium ion in the vicinity of the electrode interface, depression of supersaturation of the lithium salt , and acceleration of re-dissolving of accreted lithium salt .

As one of embodiments of the present invention, the battery design to assign a proper rate, with respect to the battery capacity, to the workable capacity for the unit area of cathode-to-anode facing will also depress said rise in the concentration of the lithium ion. In concrete, in any one of above descriptions [1] to [5], the workable capacity of said cathode or anode is preferred to be designed being between 0.30 mAh/cm$^2$ and 0.75 mAh/cm$^2$ for the unit area of cathode-to-anode facing.

As contrasted with the battery capacity defined for a lithium secondary battery, the electrical quantity that use the cathode is defined as the workable capacity of the cathode. This means that the battery capacity and the workable capacity of the cathode are the same in terms of the electrical quantity. Likewise, as contrasted with the battery capacity defined for a lithium secondary battery, the electrical quantity that use the anode is defined as the workable capacity of the anode. This means that the battery capacity, the workable capacity of the cathode, and the workable capacity of the anode are the same in terms of the electrical quantity.

In general, an electrical quantity (capacity) that the cathode and anode can usable in charging and discharging does not always mean the full capacity of a battery usable. For example, when individual capacities are different from each other in the cathode and anode, the usable capacity of a battery cannot be larger than the capacity whichever is smaller. Moreover, the capacity of an electrode has generally two different kinds of capacities. One is a reversible capacity that corresponds to an electrical quantity of lithium ion reversibly for intercalate and deintercalate from the electrode and the other is an irreversible capacity. Thus, the difference of electrical quantities between the reversible capacity of the cathode and the irreversible capacity of the anode determines the electrical quantity that is reversibly available for charging into and discharging from a battery.

The reversible capacity and the irreversible capacity in the present invention are defined as stated below. On completion of manufacturing the cathode or anode, the first charging (initial charging) is applied. The reversible capacity is defined as an electrical quantity that is able to be discharged in the discharging after the first charging, and the irreversible capacity is defined as the difference between the electrical quantity charged at the first charging and said reversible capacity.

Therefore, the workable capacity for the unit area of cathode-to-anode facing is the quotient of the battery capacity of a lithium secondary battery divided by the area of cathode-to-anode facing. For example, in the case of the sheet-shaped electrode composed from mix coating on corrector of metallic foil, which includes active material, applied thereon, the area of cathode-to-anode facing means the area that the cathode mix and the anode mix face each other across a separator.

In the lithium ion secondary battery having this kind of electrode composition, the area of the mix coating on the anode is made usually to be larger than the one on the cathode so that every part of the mix coating on the cathode may face to the mix coating on the anode. Therefore, the unit area of cathode-to-anode facing can be regarded as the mix coated area on the cathode.

When a lithium ion secondary battery is being discharged with a current of 10 C to the battery capacity thereof, it means that the current flowing is also a current of 10 C to the workable capacities of the cathode and anode. Therefore, the current density for the unit area of cathode-to-anode facing is also 10 C to the workable capacity for the unit area of facing.

On the other hand, the concentration of lithium ion in the electrolyte near the interface of the anode at the time of discharging depends on the amount of the lithium ion deintercalated from the anode, said concentration is determined by the current rate for the unit area of facing. This means existence of threshold of current density to reach supersaturation of the lithium salt . Therefore, lowering in the concentration of the lithium salt can be depressed by designing the workable capacity of the anode so that the current density for the unit area of facing in the 10 C discharging may be small with respect to said threshold of current density.

Meanwhile, lowering in the concentration of lithium salt in the electrolyte can be depressed by making the workable capacity of the cathode or anode for the unit area of cathode-to-anode facing be 0.75 mAh/cm$^2$ or less. When the workable capacity of the cathode or the anode is intended to be less than 0.30 mAh/cm$^2$, such attempt invites a greater influence of the fluctuation in the composition of the mix dependent on the part of the cathode and anode causing occurrence of another influence of the deviations among the workable capacities of individual parts thereof. Then stableness in the battery performance becomes difficult to be attained.

The lithium ion secondary battery by the present invention is characterized in that the workable capacity of the cathode or anode for the unit area of cathode-to-anode facing is between 0.30 mAh/cm$^2$ and 0.75 mAh/cm$^2$.

The following explains the manufacturing method of the lithium ion secondary battery by the present invention.

The manufacturing process is as follows.

Selection is conducted for the suitable active material for the cathode and anode. In the cathode and anode, one or plural cathode active materials and anode active materials are used.

In designing the reversible capacity ($C_R$) and the irreversible capacity ($C_{IR}$) of a cathode and the ratio between these capacities, suitable cathode active material should be selected. Alternatively, a plurality of suitable cathode active materials each having different capacities may be used in a mixture of proper mixing ratio. Likewise, in designing the reversible capacity ($A_R$) and the irreversible capacity ($A_{IR}$) of an anode and the ratio between these capacities, suitable anode active material should be selected. Alternatively, a plurality of suitable anode active materials each having different capacities may be used in a mixture of proper mixing ratio.

The designing of capacities of the cathode and anode may further accept adjustment of the amount of active material for the unit area by changing thickness and density of the mix which includes the active material and by adjustment of the ratio of materials in the mix that are not charging and discharging such as conducting agent and binder.

As one of the examples which use above-described methods, determination of the weight ratios among materials in the cathode mix to be used on the cathode, which are the cathode active material, the conducting agent, and the binder, will be described. The weight ratios among materials in the anode mix to be used on the anode, which are the anode active material and the binder, will be determined separately. Then, the amount of the mix for the unit area of the cathode is provisionally determined within ample range of thicknesses and densities of the mix, and based thereon, the initial charging capacity ($C_R$) + ($C_{IR}$) for the unit area of the cathode is computed.

Corresponding to the initial charging capacity thus computed for the unit area of the cathode, suitable initial charging capacity ($A_R$) + ($A_{IR}$) for the unit area of the anode is determined to calculate the amount of the mix for the unit area of the anode. In this determination, the initial charging capacity of the anode is made to be equal to or larger than the initial charging capacity of the cathode. Then, the workable capacity for the unit area of facing is calculated using the equation ($C_R$) - ($A_{IR}$) based on the capacities of the cathode and anode. After this calculation, the amounts of the mix for the cathode and anode are regulated maintaining their ratio undisturbed so that the intended workable capacity may be attained.

To obtain the battery that satisfies desired performance however, it is preferred to conduct a fine adjustment for the above-mentioned designed values based on the performance of the battery manufactured according to the above method.

A concrete example of method for embodiment of the lithium ion secondary battery is explained hereunder.

<Fabrication of Cathode>

Powder of the cathode active material of composite oxide of lithium and transition metal, and conducting agent are mixed well. As one of the conducting agents, use of graphite-based or amorphous carbon powder is preferred. The preferred mixing ratio (weight ratio) of the cathode active material and the conducting agent is 7 % to 25 % in terms of the conducting agent to the cathode active material. Then a slurry is prepared by adding a solution to said mixture followed by mixing, wherein said solution is a solution in which a binder, polyvinylidene fluoride (PVDF) for example, is solved using a solvent like N-methylpyrrolidone (NMP).

The slurry thus prepared is applied on an aluminum foil of 10 μm to 20 μm thick and dried at a temperature between 80°C to 100°C. Following the same procedure, the slurry is applied on the reverse side of the aluminum foil and is dried. The aluminum foil thus coated with the slurry is compressed under a roll pressing equipment to be cut into a predetermined length for a sheet-shaped cathode.

<Fabrication of Anode>

As the anode active material, carbon material and a material that is reversibly inserted or to react lithium may be cited, however, those carbon materials such as graphite-based material and amorphous carbon material or the like are of particular preference.

Discharging behavior of a lithium ion secondary battery varies depending on kinds of the carbonic material. Since graphite-based material generally shows a flat discharging potential at about 0.1 V on metal Li reference, a lithium ion secondary battery with stable discharging voltage becomes obtainable by using this material. Further, amorphous carbonic material continuously varies in its potential according to depth of discharge, therefore, a lithium ion secondary battery that permits eased examination of remaining capacity based on battery voltages becomes practicable by using this material.

Those materials which are reversibly capable of permitting lithium to be inserted or to react may be metals, such as, aluminum, tin, silicon, indium, gallium, and magnesium; alloys that include elements of these metals; and metal oxides that include tin, silicon, or the like. Further, mix materials combined said metals including their alloys and oxides with graphite-based or amorphous carbonic materials may also be applicable.

One example in the anode fabrication process is described below. Using carbonic material as the anode active material, a slurry was prepared by adding a solution followed by mixing, wherein said solution was a solution in which PVDF, or the like, is solved as a binder using a solvent like NMP. This slurry is applied on a copper foil and dried at a temperature between 80°C to 100°C. Following the same procedure, the slurry obtained by the above processing is applied on the reverse side of the copper foil and is dried. The copper foil thus coated with the slurry is compressed under a roll pressing equipment to be cut into a predetermined length for a sheet-shaped anode.

<Manufacturing Cylindrical Lithium Ion Secondary Battery>

One of examples of manufacturing a cylindrical lithium ion secondary battery is described below. Using the sheet-shaped cathode and anode each fabricated by the process described above, the cathode and the anode are wound into a cylinder to form a group of electrodes with a separator of porous insulating film of 15 μm to 50 μm thick sandwiched therebetween, which is accommodated in a battery case of SUS or aluminum. As the separator, a porous polymer insulating film like polyethylene (PE) or polypropylene (PP) or laminates of such films, or a porous polymer insulating film in which inorganic compound such as alumina is dispersed may be usable.

The battery case that accommodates the group of electrodes wound in a cylinder is filled with nonaqueous electrolyte, a solution of lithium salt solved in nonaqueous solvent, in dry air or inert gas atmosphere, and is sealed to complete the cylindrical lithium secondary battery.

The lithium salt supplies lithium ion that drifts across electrolyte while the battery is under charging and discharging. One or more materials selected among from $LiClO_4$, $LiCF_3SO_3$, $LiPF_6$, $LiBF_4$, and $LiAsF_6$ may be usable as said lithium salt . As the organic solvent, carbonates, esters, and ethers may be cited. For further concreteness, ethylene carbonate (EC), propylene carbonate, butylene carbonate, dimethyl carbonate (DMC), diethyl carbonate (DEC), methyl-ethyl carbonate, diethyl carbonate, and γ-butyrolactone are cited for example. Each of these materials is prepared into nonaqueous solvent independently or in a mixture with others.

The concentration of the lithium salt in the nonaqueous electrolyte of the lithium ion secondary battery by the present invention at the time of liquid filling is preferably to be between 0.3 mol/liter and 3.0 mol/liter, and 0.5 mol/liter and 3.0 mol/liter for more preferable values.

For improved battery safety, depression of side reaction, and stabilized performance under high temperatures, those various additives, for example sulfur-based compound or phosphorous-based compound, which are soluble in said solvent or usable as solute and solvent alike may also be used where suitable.

<Manufacturing Square Lithium Ion Secondary Battery>

One of examples of manufacturing a square lithium ion secondary battery is described below. The coating process for the cathode and anode is the same as the one in the cylindrical lithium ion secondary battery. To manufacture a square lithium secondary battery, a wound-group is fabricated around a square center pin. Likewise in the cylindrical lithium secondary battery, the wound-group is accommodated in a battery case, which is sealed after being filled with electrolyte. A laminate of separator, cathode, separator, anode, separator, and so on may be used as an alternative to the wound-group.

Hereunder, explained are procedures for determination of the battery capacity and proper voltage range for charging and discharging in the lithium ion secondary battery in the present invention.

The capacity of a battery usually varies according to charging and discharging conditions. Higher limit voltage for charging gives a larger capacity, however, a little change in the capacity will be realized in limit voltages over certain value. Similarly, lower limit voltage for discharging provides a larger capacity, but a little change in the capacity will be obtainable when limit voltages are below certain extent. The use with enlarged capacity may sometimes invite an adverse effect, shortener in the battery life. Therefore, the rated capacity of a battery is determined by the conditions for charging and discharging specified by the manufacturer.

The capacity of a battery is liable to decline as the discharging current increases. The current region in which the discharging capacity would largely change as a consequence of variation in the discharging current is such region for currents of 1 C or over, and the capacity change is small in the region 0.5 C or less.

To examine a lithium ion secondary battery for its battery capacity, approximate capacity and rough range for charging and discharging voltages are firstly analogized based on the type and size of the battery. In the lithium ion secondary battery, wherein, for example, the cathode active material is layer structure composite oxide which includes cobalt and/or nickel together with lithium, or spinel structure composite oxide which includes mainly manganese and lithium, and the anode is comprised mainly of carbon; the upper termination for charging voltage can be analogized as being between 4.1 V and 4.3 V, and lower termination for discharging voltage between 2.5 V and 3.2 V.

Then, the charging and discharging test is conducted with a current equivalent to 0.25 C but within the analogized voltage range for charging and discharging. In the charging stage in this test, the constant voltage charging is performed for one to three hours after the battery voltage reaches predetermined limit voltage for charging. Charging is performed on every 50 mV of change in limit voltage for charging. When the variation of the battery capacity stays within about 4 % through out such limit voltage change, said predetermined limit voltage for charging is regarded as an acceptable condition for the limit voltage for charging. Similarly, discharging is performed on every 50 mV of change in limit voltage for discharging. When the variation of the battery capacity stays within about 4 % through out such limit voltage change, said predetermined limit voltage for discharging is regarded as an acceptable condition for the limit voltage for discharging.

According to the definition of the hour rate (Rate), discharging the battery capacity through a current equivalent to 0.25 C allows four hours of time to consume. When the practically required time length for discharging is different from said length by more than 30 minutes, current is regulated by increasing the current when the discharging time is longer and by decreasing when shorter.

Hereunder, explained are procedures for measuring the concentration of lithium salt in the nonaqueous electrolyte of the lithium ion secondary battery in the present invention.

A lithium ion secondary battery at an optional point of time is discharged to the specified fully-discharged state. This lithium ion secondary battery is disassembled in inert gas atmosphere like argon or dry air to separate the sheet-shaped cathode in the battery followed by cutting into a proper size of fragments of cathode, which is put in a hermetically sealed vessel, like polyethylene container, being filled with extraction solvent of known weight then the vessel is sealed to extract the lithium salt .

This treatment should be completed within 2 to 24 hours from the starting time by optional definition until the vessel sealing. The extraction solvent should preferably be selected among from such nonaqueous solvents that compose nonaqueous electrolyte, and the extraction time length is 6 to 24 hours.

Taking out the fragment of cathode from the hermetically sealed vessel after extraction, the concentration of the lithium salt in the extraction solvent is determined then total amount of the lithium salt is calculated based on the weight of the extraction solvent. The lithium salt is determined by, for example, determination of elements that constitute the lithium salt using the high frequency induction plasma emission spectrometry technique. The element to be determined is preferred to be an element such that the constituting element in a battery derived from said element is the lithium salt . Such element means chlorine is for $LiClO_4$, phosphorus for $LiPF_6$, boron for $LiBF_4$, and arsenic for $LiAsF_6$.

The quotient of the calculated total amount of the lithium salt divided by the void volume in the fragment of cathode is defined as the concentration of the lithium salt in the nonaqueous electrolyte. Measuring the void volume in the fragment of cathode is available by fully washing the fragment of cathode after extraction using the same extraction solvent followed by drying out the solvent, then filling voids by impregnation with properly selected liquid to measure the amount of the liquid impregnated.

Alternatively, the void volume in the fragment of cathode may be geometrically calculated based on the ratio of voids (porosity) to the volume of the mix on the fragment of cathode using formula 1 given below.

$$(Void\ Volume) = (Volume\ of\ Mix) \times (Porosity) \qquad \text{(Formula 1)}$$

The porosity is calculated by formula 2 based on the bulk density of the mix on the fragment of cathode and the true density of the mix.

$$(Porosity) = 1 - (Bulk\ Density\ of\ Mix) / (True\ Density\ of\ Mix) \qquad \text{(Formula 2)}$$

The true density of the mix is calculated by formula 3 based on true densities and weight ratio of materials that constitute the mix on the cathode.

$$(True\ Density\ of\ Mix) = 1 / \Sigma\ [\ (Weight\ Ratio\ of\ Materials) / (True\ Density\ of\ Materials)\ ] \qquad \text{(Formula 3)}$$

The measurement of the concentration of the lithium salt can be performed using the anode as well.

In addition, in the measurement of the concentration of the lithium salt , it is preferred to conduct the measurement for the portion on the cathode or anode that causes less flaking or blistering of the mix. For assured accuracy, concentration measurement at three or more parts for one lithium ion secondary battery is preferred. In such measurement, the measuring points should not have pick up in a particular portion in the electrode of the lithium ion secondary battery.

Although the lithium ion secondary battery in the present invention is not given any specific limitation in its field of use, the battery is useful for the power sources on various electric vehicles such that their power sources are required to have acceptable performance in output discharging and regenerative charging both under heavy load. As examples of those electric vehicles that use such electrical power source, a vehicle, which is mounted with a generating equipment such as a generator driven by an internal combustion engine or a fuel cell, and a hybrid vehicle, which uses both driving sources one by an internal combustion engine and the other by an electric motor, are cited.

This battery is further usable as the power source for a rail motor mounted with a generator driven by an internal combustion engine, for a elevator, and for various electric powered tools. Moreover, various portable apparatuses and information equipment, home electric appliances, electrical power storage systems, etc. may be cited as fields of use of the lithium ion secondary battery in the present invention.

Hereunder explains an embodiment of the present invention. However, it is to be understood that the scope of the present invention is not limited to the specific embodiments described hereunder.

<Manufacturing Lithium Ion Secondary Battery>

(Embodiment 1)

The cylindrical lithium ion secondary battery in embodiment 1 of the present invention is manufactured as described below.

First, a sheet-shaped cathode is fabricated. Powder of lithium manganate, having a reversible capacity of 102 mAh/g and an irreversible capacity of 1 mAh/g, is selected as the cathode active material, and graphite and acetylene black as the conducting agent. The powder of the lithium manganate and scaly graphite have been classified in advance for removing coarse particles over 10 $\mu$m therefrom. These powders are mixed with addition of PVDF solution, prepared in advance as the binder by being solved in the NMP, then is given further mixing with a mixer to prepare a cathode mix slurry.

The mixing ratio in this preparation for powder of lithium manganate, graphite, acetylene black, and PVDF is ensured to be 85:8:2:5 in terms of dry weight ratio in the mix. This slurry is continuously applied on a supplied-in-roll aluminum foil (a cathode corrector) having a thickness of 15 $\mu$m with substantial uniformity and evenness for successive drying. In this processing, a certain portion is left non-coated at the both edges of the foil width.

After being dried in a temperature of 80°C, the coated aluminum foil is treated with the same procedure for both sides thereof being coated then dried. In this treatment, the spread of the mix is controlled so that the amount of the mix on the unit area of coating may become 12.6 mg/cm$^2$ after drying. Then, the coated foil is pressed down with a roll press to densify the mix on the foil into 2.60 g/cm$^3$, then is cut into the sizes of 8.2 cm in coated width and 260 cm in coated length leaving non-coated portion on one edge of the width. On the non-coated portion, aluminum leads are spot welded at an interval of 20 cm along the foil length to allow current terminals installed thereon for current pickup, thus the sheet-shaped cathode is completed in assembling. The area coated with the cathode mix is 4260 cm$^2$ and the porosity thereof is 27 %.

Then the process enters fabrication of the anode. Powder of amorphous carbon, having a reversible capacity of 340 mAh/g and an irreversible capacity of 100 mAh/g classified for removing coarse particles over 10 $\mu$m therefrom, is agitated using a mixer with addition of PVDF solution prepared as the binder by being solved in advance in the NMP to prepare an anode mix slurry. The mixing ratio in this preparation, in terms of dry weight ratio in the mix, for powder of amorphous carbon and PVDF is ensured to be 90:10.

Following the same procedure in fabricating the sheet-shaped cathode, the anode mix slurry is applied on both sides of a supplied-in-roll copper foil (anode corrector) having a thickness of 10 $\mu$m and dried. In this treatment, the spread of the mix is controlled so that the amount of the mix on the unit area of coating may become 3.5 mg/cm$^2$ after drying. Then the coated foil is pressed down to be cut into the sizes of 8.6 cm in coating width and 270 cm in coating length so that non-coated portion may be left on one edge of the width. On the non-coated portion, copper leads are spot welded at an interval of 20 cm along the foil length to allow current terminals installed thereon for current pickup, thus the sheet-shaped anode is completed in assembling.

A cylindrical battery, shown in Fig. 2, is fabricated using completed sheet-shaped cathode and anode. These sheet-shaped cathode 11 and sheet-shaped anode 12 are wound into a group of electrodes sandwiching a separator 13 to prevent electrodes from direct contacting each other.

A lead 17 on the cathode 11 and a lead 15 on the anode 12 are arranged in opposite at both end-faces of the group of electrodes. The coated portion on the cathode 11 is kept without protrusion off the mix on the anode 12. This arrangement assures that the facing area between the cathode 11 and the anode 12 is equal to mix coating area on the cathode 11. The separator 13 uses a fine-porous polypropylene film of 40 $\mu$m in thickness and 9.0 cm in width.

Then, the tops of the leads 17 and 15 of the cathode 11 and the anode 12 respectively are twisted and welded. The group of electrodes is then accommodated in a battery case (a battery container) 14. The twisted anode lead 15 is welded on the bottom of the battery case 14 and the twisted cathode lead 17 is also welded on a sealing cap 16 which also works as the current terminal of the cathode.

After filling the battery case 14 with 25 g of nonaqueous electrolyte, the sealing cap 16 fitted with the cathode terminal is crimped onto the battery case 14 interleaving a packing 18 therebetween to seal the case for a completed cylindrical battery.

The nonaqueous electrolyte used herein is a solution of 1.0 mol/liter of LiPF$_6$ solved in a mixed solvent of EC, DMC, and DEC in a volume ratio of 1:1:1.

The battery in embodiment 1 is measured for its battery capacity at the room temperature with following manner. The battery is charged with 0.25 C of charging current for 6 hours under upper limit voltage of 4.2 V. When the battery voltage reaches 4.2 V, charging mode is switched into a constant voltage charging. The discharging condition is the constant current discharging with 0.25 C of current on the limit voltage of 2.7 V.

The battery fabricated in embodiment 1 is given two cycles of charging and discharging, in which the discharging capacity at the second discharging is taken as the battery capacity. The battery capacity of the lithium ion secondary battery in embodiment 1 is 3.20 Ah and the workable capacities for the unit area of facing for both the cathode and anode is 0.75 mAh/cm$^2$.

(Embodiment 2)

The cylindrical lithium ion secondary battery in embodiment 2 of the present invention is manufactured as described below.

Manufacturing is performed under the same conditions as those in embodiment 1 except modifications in that the amount of the cathode mix for the unit area of coating after drying is 11.7 mg/cm$^2$, that the amount of the anode mix for the unit area of coating after drying is 3.2 mg/cm$^2$, and that an adjustment is applied to the cathode and anode for their electrode lengths and mix coating lengths so that the volume of the group of the electrodes may become equal to that in embodiment 1. The porosity of the cathode mix is 27 % and the area coated with the cathode mix, i.e. the facing area between the cathode and the anode, is 4440 cm$^2$.

As the result of the measurement on the battery in embodiment 2 conducted in the same manner as the procedure in embodiment 1, it is known that the battery capacity of the lithium ion secondary battery in embodiment 2 is 3.11 Ah and that the workable capacities for the unit area of facing for both the cathode and anode is 0.70 mAh/cm$^2$.

(Embodiment 3)

The cylindrical lithium ion secondary battery in embodiment 3 of the present invention is manufactured as described below.

Manufacturing is performed under the same conditions as those in embodiment 1 except modifications in that the amount of the cathode mix for the unit area of coating after drying is 10.9 mg/cm$^2$, that the amount of the anode mix for the unit area of coating after drying is 3.0 mg/cm$^2$, and that an adjustment is applied to the cathode and anode for their electrode lengths and coating lengths so that the volume of the group of the electrodes may become equal to that in embodiment 1. The porosity of the cathode mix is 27 % and the area coated with the cathode mix, i.e. the facing area between the cathode and the anode, is 4620 cm$^2$.

As the result of the measurement on the battery in embodiment 3 conducted in the same manner as the procedure in embodiment 1, it is known that the battery capacity of the lithium ion secondary battery in embodiment 3 is 3.01 Ah and that the workable capacities for the unit area of facing for both the cathode and anode is 0.65 mAh/cm$^2$.

(Embodiment 4)

The cylindrical lithium ion secondary battery in embodiment 4 of the present invention is manufactured as described below.

Manufacturing is performed under the same conditions as those in embodiment 1 except modifications in that the amount of the cathode mix for the unit area of coating after drying is 10.1 mg/cm$^2$, that the amount of the anode mix for the unit area of coating after drying is 2.8 mg/cm$^2$, and that an adjustment is applied to the cathode and anode for their electrode lengths and coating lengths so that the volume of the group of the electrodes may become equal to that in embodiment 1. The porosity of the cathode mix is 27 % and the area coated with the cathode mix, i.e. the facing area between the cathode and the anode, is 4840 cm$^2$.

As the result of the measurement on the battery in embodiment 4 conducted in the same as the procedure in embodiment 1, it is known that the battery capacity of the lithium ion secondary battery in embodiment 4 is 2.92 Ah and that the workable capacities for the unit area of facing for both the cathode and anode is 0.60 mAh/cm$^2$.

(Embodiment 5)

The lithium ion secondary battery in embodiment 5 of the present invention is manufactured under the same conditions as those in embodiment 2 except in that the nonaqueous electrolyte used is a solution of 1.5 mol/liter of LiBF$_4$ solved in a mixed solvent of EC, DMC, and DEC in a volume ratio of 4:3:3.

As the result of the measurement on the battery in embodiment 5 conducted in the same manner as the procedure in embodiment 1, it is known that the battery capacity of the lithium ion secondary battery in embodiment 5 is 3.10 Ah and that the workable capacities for the unit area of facing for both the cathode and anode is 0.70 mAh/cm$^2$.

(Comparative Example 1)

The cylindrical lithium ion secondary battery in comparative example 1 for the present invention is manufactured as described below.

Manufacturing is performed under the same conditions as those in embodiment 1 except modifications in that the amount of the cathode mix for the unit area of coating after drying is 13.4 mg/cm$^2$, that the amount of the anode mix for the unit area of coating after drying is 3.7 mg/cm$^2$, and that an adjustment is applied to the cathode and anode for their electrode lengths and coating lengths so that the volume of the group of the electrodes may become equal to that in embodiment 1. The porosity of the cathode mix is 27 % and the area coated with the cathode mix, i.e. the facing area between the cathode and the anode, is 4080 cm$^2$.

As the result of the measurement on the battery in comparative example 1 conducted in the same manner as the procedure in embodiment 1, it is known that the battery capacity of the lithium ion secondary battery in comparative example 1 is 3.26 Ah and that the workable capacities for the unit area of facing for both the cathode and anode is 0.80 mAh/cm$^2$.

(Comparative Example 2)

The cylindrical lithium ion secondary battery in comparative example 2 of the present invention in manufactured under the same conditions as those in comparative example 1 except in that the concentration of LiPF$_6$ in the nonaqueous electrolyte is 2.0 mol/liter.

As the result of the measurement on the battery in the comparative example 2 conducted in the same manner as the procedure in the embodiment 1, it is known that the battery capacity of the lithium ion secondary battery in the comparative example 2 is 3.26 Ah and that the workable capacities for the unit area of facing on both the cathode and anode is 0.80 mAh/cm$^2$.

(Embodiment 6)

The cylindrical lithium ion secondary battery in embodiment 6 of the present invention is manufactured as described below.

Powder of lithium nickelate, having a reversible capacity of 174 mAh/g and an irreversible capacity of 23 mAh/g, classified in advance for removing coarse particles over 10 μm therefrom, is used as the cathode active material. Using this material together with graphite conducting agent, acetylene black, and PVDF solution solved in NMP, which are used in embodiment 1, the cathode mix slurry is prepared in the same manner as the procedure in embodiment 1.

The mixing ratio in this preparation for powder of lithium nickelate, graphite, acetylene black, and PVDF is 80:11:3:6 in terms of dry weight ratio in the mix. Using this cathode mix slurry, coating and drying are performed in the same manner as the procedure in embodiment 1. In this processing, the amount of the coating is controlled so that the amount of the mix on the unit area of coating may become 6.5 mg/cm$^2$ after drying.

After that, the coated foil is pressed down with a roll press to densify the mix on the foil into 2.50 g/cm$^3$, then is cut into the sizes of 8.2 cm in coating width and 328 cm in coating length leaving non-coated portion on one edge of the width. On the non-coated portion, aluminum lead tabs are spot welded at an interval of 20 cm along the foil length to allow current terminals installed thereon for current pickup, thus the sheet-shaped cathode is completed in assembling. The area coated with the cathode mix is 5380 cm$^2$ and the porosity thereof is 33 %.

Then the process enters fabrication of the anode. Powder of artificial graphite, having a reversible capacity of 300 mAh/g and an irreversible capacity of 40 mAh/g and classified for removing coarse particles over 10 μm therefrom, is agitated using a mixer with addition of PVDF solution prepared as the binder by being solved in advance in the NMP to prepare an anode mix slurry. The mixing ratio in this preparation, in terms of dry weight ratio in the mix, for powder of artificial graphite and PVDF is ensured to be 90:10.

Using the anode mix slurry thus prepared, coating and drying are performed following the same procedure in embodiment 1. In this treatment, the spread of the mix is controlled so that the amount of the mix on the unit area of coating may become 4.2 mg/cm$^2$ after drying. Then the coated foil is pressed down to be cut into the sizes of 8.6 cm in coating width and 338 cm in coating length so that non-coated portion may be left on one edge of the width. On the non-coated portion, copper leads are spot welded at an interval of 20 cm along the foil length to allow current terminals installed thereon for current pickup, thus the sheet-shaped anode is completed in assembling.

Using the sheet-shaped cathode and anode-cathode, a cylindrical battery is fabricated following the procedure in embodiment 1 to obtain the battery of embodiment 6.

As the result of the measurement on the battery in embodiment 6 conducted in the same manner as the procedure in embodiment 1, it is known that the battery capacity of the lithium ion secondary battery in embodiment 6 is 4.02 Ah and that the workable capacities for the unit area of facing for both the cathode and anode is 0.70 mAh/cm$^2$.

(Comparative Example 3)

The cylindrical lithium ion secondary battery in comparative example 3 in the present invention is manufactured as described below.

Manufacturing is performed under the same conditions as those in embodiment 6 except modifications in that the amount of the cathode mix for unit area of coating after drying is 7.0 mg/cm$^2$, that the amount of the anode mix for unit area of coating after drying is 4.5 mg/cm$^2$, and that an adjustment is applied to the cathode and anode for their electrode lengths and coating lengths so that the volume of the group of the electrodes may become equal to that in embodiment 6. The porosity of the cathode mix is 33 % and the area coated with the cathode mix, i.e. the facing area between the cathode and the anode, is 5180 cm$^2$.

As the result of the measurement on the battery in comparative example 3 conducted in the same manner as the procedure in embodiment 1, it is known that the battery capacity of the lithium ion secondary battery in comparative example 3 is 4.14 Ah. Therefore, the workable capacities for the unit area of facing for both the cathode and anode is 0.80 mAh/cm$^2$.

The following explains the property tests conducted on those batteries thus manufactured and measured for their battery capacity in embodiments 1 to 6 and comparative examples 1 to 3.

<Initial Property Test>

The discharging test is conducted at room temperature on each of the batteries in embodiments 1 to 6 and comparative examples 1 to 3. The discharging property at this stage is hereinafter referred to as the discharging property at 0-hour in the cyclic test.

The lithium ion secondary battery of which battery capacity is measured is charged to 50 % of its battery capacity with a charging current equivalent to 0.25 C. Then, the battery is held with its circuit open for 30 minutes after the charging to make the voltage stabilized, which is measured as the voltage ($V_1$). Next, the battery is discharged for 10 seconds through a constant current of 2.5 C to the battery capacity and is measured for its voltage ($V_2$) at the end of said 10 seconds of time. After that, the battery is charged with an electrical quantity equivalent to discharged amount and kept its circuit open for 30 minutes. The set of these measurements is conducted varying the current to 5 C, 7.5 C, and 10 C.

The lower limit for discharging voltage was set at 2.7 V and the discharging was terminated when the battery voltage reached 2.7 V. The voltage drop $\Delta V = V_1 - V_2$ was calculated for each discharging current I to obtain the resistances R = $\Delta$ V/I on 2.5 C ($R_{2.5}$), 5 C ($R_5$), 7.5 C ($R_{7.5}$), and 10 C ($R_{10}$).

The concentration of the lithium salt ($LiPF_6$, but $LiBF_4$ for embodiment 5) in the nonaqueous electrolyte is measured for each lithium ion secondary battery.

To the batteries with their battery capacities measured, the constant current discharging is applied, in which the discharging current is 0.25 C and the limit voltage is 2.7 V. These lithium ion secondary batteries are kept with their circuits open for 30 minutes after termination of the discharging before accommodating in an argon gas sealed glove box.

Fragments of cathode are prepared by: cutting the battery case, taking out the group of electrodes from the case, separating the sheet-shaped cathode, and cutting the cathode into portions of 30 cm long at positions longitudinally about 70 cm (portion A), about 140 cm (portion B), and about 210 cm (portion C). Prepared fragments of cathode are put in a polyethylene vessel filled with 100 g of extraction solvent (dimethyl carbonate), then the vessel is sealed.

After 18 hours from said accommodation in the polyethylene vessel and sealing, fragments of cathode are taken out to determine the concentration of phosphorus (but boron for embodiment 5) in the dimethyl carbonate with the high frequency induction plasma emission spectrometry for calculation of the lithium salt amount based on the weight of the extraction solvent.

On the other hand, the void volume is calculated by multiplying the mix volume on the fragments of cathode by the porosity then the concentration of the lithium salt is computed from the quotient of said lithium concentration divided by said void volume.

Table 1, shown below, gives aspects of each lithium ion secondary battery examined in embodiments 1 to 6 and comparative examples 1 to 3, i.e. the workable capacity of the cathode (or anode) for the unit area of cathode-to-anode facing; the discharging resistance (R) at the 0-hour in the cyclic test; the concentration of lithium salt in the nonaqueous electrolyte filled while manufacturing; and the concentration of lithium salt at each portion in the measurement of concentration of lithium salt together with their average of each portion.

TABLE 1

| | Cathode* Anode Workable Capacity (mAh/cm²) | Discharging Resistance (mΩ) | | | | Lithium salt Concentration (mol/liter) | | | | |
|---|---|---|---|---|---|---|---|---|---|---|
| | | $R_{2.5C}$ | $R_{5C}$ | $R_{7.5C}$ | $R_{10C}$ | When Filled | Portion A | Portion B | Portion C | Average |
| Embodiment 1 | 0.75 | 9.8 | 9.8 | 9.8 | 9.8 | 1.0 | 0.97 | 1.02 | 0.96 | 0.98 |
| Embodiment 2 | 0.70 | 9.4 | 9.4 | 9.3 | 9.4 | 1.0 | 1.00 | 0.95 | 0.95 | 0.97 |
| Embodiment 3 | 0.65 | 9.0 | 9.0 | 9.0 | 9.0 | 1.0 | 0.94 | 1.01 | 1.30 | 0.99 |
| Embodiment 4 | 0.60 | 8.5 | 8.6 | 8.5 | 8.6 | 1.0 | 0.98 | 0.98 | 0.96 | 0.97 |
| Embodiment 5 | 0.70 | 12.3 | 12.3 | 12.3 | 12.4 | 1.5 | 1.43 | 1.50 | 1.46 | 1.48 |
| Compar. Ex. 1 | 0.80 | 10.2 | 10.2 | 10.2 | 10.3 | 1.0 | 0.99 | 1.00 | 0.95 | 0.98 |
| Compar. Ex. 2 | 0.80 | 10.2 | 10.2 | 10.2 | 10.3 | 2.0 | 2.00 | 1.95 | 1.92 | 1.95 |
| Embodiment 6 | 0.75 | 10.9 | 10.9 | 10.9 | 11.0 | 1.0 | 0.97 | 0.97 | 0.94 | 0.96 |
| Compar. Ex. 3 | 0.80 | 11.3 | 11.3 | 11.4 | 11.3 | 1.0 | 0.98 | 1.02 | 0.99 | 1.00 |

As Table 1 clearly shows, the discharging resistances for 2.5 C to 10 C in the initial discharging performance are almost the same value each other within tolerable measuring error for any lithium ion secondary battery in the table showing stable discharging performance up to the discharging current of 10 C. Also shown is, in every lithium ion secondary battery in the table, the concentration of the lithium salt stays within being slightly lower extent than that in the manufacturing stage (this is believed being attributed by a side effect at the initial charging).

<Cyclic Test 1>

The charging and discharging cyclic test 1 is conducted for 300 hours on two lithium ion secondary batteries picked up separately from those batteries in embodiment 1, embodiment 2, embodiment 5, embodiment 6, comparative example 1, comparative example 2, and comparative example 3, for which their battery capacities have been measured. The cyclic test for said two batteries is composed of a charging and discharging pattern: discharging for 10 seconds with a current equivalent to 10 C to the battery capacity and charging for 20 seconds with a current equivalent to 5 C under substantial absence of open-circuit period. The cyclic test is performed at room temperature.

The battery voltage at the start of testing is determined within the range of 3.75 V to 3.80 V and the boundary voltage during the cyclic test is set at 4.2 V for the upper limit and 2.7 V for the lower limit. The testing stage is switched into the discharging stage when the battery voltage reaches 4.2 V while charging even before the 20 seconds of charging time elapses. Likewise, the testing stage is switched into the charging stage when the battery voltage reaches 2.7 V while discharging even before the 10 seconds of discharging time elapses.

About every 100 hours, regulating charging or discharging is applied with 1 C of current so that the battery voltage may be maintained within the range of 3.75 V to 3.80 V. The cyclic test in said charging and discharging pattern resumes immediately after this regulating charging or discharging completes.

Each one lithium ion secondary battery severally out of said two batteries in the above-described group of batteries, for which cyclic test 1 are completed, is measured for its discharging performance. Immediately after the completion of cyclic test 1, the battery is discharged with a constant current of 0.25 C to the limit voltage of 2.7 V, then is given a 4-hour charging with a constant current of 0.5 C with the upper limit voltage of 4.2 V, at which voltage the battery is switched into a constant voltage charging at 4.2 V even before such 4-hour charging completes.

The battery is again discharged with a constant current of 0.25 C to the limit voltage of 2.7 V then is measured for the battery capacity of post-cyclic test. After that, the battery is brought into a charged condition to 50 % of said capacity and held with its circuit open for 30 minutes to make the voltage stabilized, which is measured as a voltage ($V_1$). Then, the battery is discharged for 10 seconds with a constant current of 2.5 C to the battery capacity at 0-hour of the cyclic test and is measured for its voltage ($V_2$) at the end of said 10 seconds of time. Next, the battery is charged with an electrical quantity equivalent to discharged amount and kept with its circuit open for 30 minutes. The set of these measurements is conducted varying the current to 5 C, 7.5 C, and 10 C.

The lower limit for discharging voltage was set at 2.7 V and the discharging was terminated when the battery voltage reached 2.7 V. The voltage drop $V = V_1 - V_2$ was calculated for each discharging current I to obtain the resistances $R = V/I$ on each discharging: 2.5 C ($R_{2.5}$), 5 C ($R_5$), 7.5 C ($R_{7.5}$), and 10 C ($R_{10}$).

The other one lithium ion secondary battery in the above-described two batteries, of which cyclic test 1 are completed, is discharged with a constant current of 0.25 C to the limit voltage of 2.7 V immediately after cyclic test 1. Then the concentration of lithium salt ($LiPF_6$, but $LiBF_4$ for embodiment 5) in the nonaqueous electrolyte of said lithium ion secondary battery is measured in the same manner that is used in the lithium salt concentration measurement at the 0-hour of the cyclic test. The time consumed from the end of the cyclic test until the sealing is about 8 to 16 hours.

Table 2, shown below, gives aspects of each lithium ion secondary battery examined in embodiments 1 and 2 and comparative examples 1 and 2, i.e. the workable capacity of the cathode (or anode) for the unit area of cathode-to-anode facing; the discharging resistance (R) at the end of cyclic test 1; and the concentration of lithium salt in the nonaqueous electrolyte at each portion together with their average.

TABLE 2

| | Cathode* Anode Workable Capacity (mAh/cm$^2$) | Discharging Resistance (mΩ) | | | | Lithium salt Concentration (mol/liter) | | | |
|---|---|---|---|---|---|---|---|---|---|
| | | $R_{2.5C}$ | $R_{5C}$ | $R_{7.5C}$ | $R_{10C}$ | Portion A | Portion B | Portion C | Average |
| Embodiment 1 | 0.75 | 13.1 | 13.3 | 14.2 | 14.8 | 0.40 | 0.43 | 0.39 | 0.41 |
| Embodiment 2 | 0.70 | 11.3 | 11.3 | 11.4 | 11.4 | 0.62 | 0.61 | 0.68 | 0.64 |
| Compar. Ex. 1 | 0.80 | 13.9 | 15.1 | 18.8 | - | 0.24 | 0.25 | 0.21 | 0.23 |
| Compar. Ex. 2 | 0.80 | 17.2 | 17.8 | 18.4 | - | 0.29 | 0.26 | 0.27 | 0.27 |

As Table 2 clearly shows, the battery voltages in a 10 C discharging of the lithium ion secondary batteries in comparative examples 1 and 2 reach the lower limit voltage of 2.7 V for discharging before 10 seconds of the discharging time elapses. The concentration of lithium salt at such stage are all less than 0.3 mol/liter for comparative examples 1 and 2, wherein the concentration of lithium salt in the electrolyte when filled was 1.0 mol/liter and 2.0 mol/liter respectively.

In contrast to this, lithium ion secondary batteries in embodiment 1 of the present invention is capable of discharging for 10 seconds even with 10 C of discharging current, which shows an excellent discharging performance compared with those in comparative examples 1 and 2. The concentration of lithium salt at that time is 0.41 mol/liter, which is not less than 0.3 mol/liter.

Further, the lithium ion secondary batteries in embodiment 2 show that their discharging resistances for 2.5 C to 10 C are almost the same value each other within tolerable measuring error representing excellent discharging performance compared with those in embodiment 1. The concentration of the lithium salt at that time is 0.64 mol/liter, which is not less than 0.3 mol/liter.

Table 3 gives aspects of each lithium ion secondary battery examined in embodiments 2 and 5, i.e. the workable capacity of the cathode (or anode) for the unit area of cathode-to-anode facing; the discharging resistance (R) at the end of cyclic test 1; and the concentration of the lithium salt in the nonaqueous electrolyte at each portion together with their average. It however should be noted that the kinds and concentrations of the lithium salts in embodiments 2 and 5 are different from each other.

TABLE 3

| | Cathode* Anode Workable Capacity (mAh/ cm$^2$) | Discharging Resistance (m$\Omega$) | | | | Lithium salt Concentration (mol/liter) | | | |
|---|---|---|---|---|---|---|---|---|---|
| | | $R_{2.5C}$ | $R_{5C}$ | $R_{7.5C}$ | $R_{10C}$ | Portion A | Portion B | Portion C | Average Average |
| Embodiment 2 | 0.70 | 11.3 | 11.3 | 11.4 | 11.4 | 0.62 | 0.61 | 0.68 | 0.64 |
| Embodiments 5 | 0.70 | 16.0 | 16.3 | 16.7 | 18.1 | 0.48 | 0.48 | 0.44 | 0.47 |

As Table 3 shows, the lithium ion secondary batteries in embodiment 5 are capable of discharging for 10 seconds even with 10 C of discharging current, which shows an excellent discharging performance compared with those in comparative examples 1 and 2. The concentration of lithium salt at that time is 0.47 mol/liter, which is not less than 0.3 mol/liter.
It however should be noted that the lithium ion secondary batteries in embodiment 5 increase their discharging resistances (R) as the discharging current varies from 2.5 C to 10 C, which means that their discharging performance are slightly inferior to those in embodiment 2.
Table 4 gives aspects of each lithium ion secondary battery examined in embodiment 6 and comparative example 3, i.e. the workable capacity of the cathode (or anode) for the unit area of cathode-to-anode facing; the discharging resistance (R) at the end of cyclic test 1; and the concentration of lithium salt in the nonaqueous electrolyte at each portion together with their average. It however should be noted that the lithium ion secondary batteries in embodiment 6 and comparative example 3 use lithium nickelate as the cathode active material and artificial graphite as the anode active material.

TABLE 4

| | Cathode* Anode Workable Capacity (mAh/cm$^2$) | Discharging Resistance (m$\Omega$) | | | | Lithium salt Concentration (mol/liter) | | | |
|---|---|---|---|---|---|---|---|---|---|
| | | $R_{2.5C}$ | $R_{5C}$ | $R_{7.5C}$ | $R_{10C}$ | Portion A | Portion B | Portion C | Average |
| Embodiment 6 | 0.75 | 16.4 | 17.1 | 18.2 | 20.5 | 0.39 | 0.44 | 0.45 | 0.43 |
| Compar. Ex. 3 | 0.80 | 18.1 | 22.5 | 29.8 | - | 0.26 | 0.28 | 0.24 | 0.26 |

As Table 4 shows, the battery voltages in a 10 C discharging of the lithium ion secondary batteries in the comparative example 3 reach the lower limit voltage of 2.7 V for discharging before 10 seconds of the discharging time elapses. The concentration of lithium salt at such stage is 0.26 mol/liter, which is less than 0.3 mol/liter.
In contrast to this, the lithium ion secondary batteries in embodiment 6 are capable of discharging for 10 seconds even with 10 C of discharging current, which shows an excellent discharging performance compared with those in comparative example 3. The concentration of lithium salt at that time is 0.43 mol/liter, which is not less than 0.3 mol/liter.

<Cyclic Test 2>

The charging and discharging cyclic test is conducted on two lithium ion secondary batteries picked up sep-

araterly from those batteries in embodiments 2 and 3 for which their battery capacities at the 0-hour in the cyclic test have been measured. The conditions for said cyclic test are the same as those in cyclic test 1 except the time duration of 700 hours instead.

Each one lithium ion secondary battery severally out of said two batteries in the above-described group of batteries, for which cyclic test 2 are completed, is measured for its discharging performance in the same manner as that in cyclic test 1. The other one lithium ion secondary battery in the above-described two batteries, of which cyclic test 2 are completed, is measured for the concentration of $LiPF_6$ in the nonaqueous electrolyte of said lithium ion secondary battery in the same manner that is used in cyclic test 1.

Table 5 gives aspects of each lithium ion secondary battery examined in embodiments 2 and 3, i.e. the workable capacity of the cathode (or anode) for the unit area of the cathode-to-anode facing; the discharging resistance (R) at the end of cyclic test 2; and the concentration of lithium salt in the nonaqueous electrolyte at each portion together with their average.

TABLE 5

| | Cathode* Anode Workable Capacity $(mAh/cm^2)$ | Discharging Resistance (m$\Omega$) | | | | Lithium salt Concentration (mol/liter) | | | |
|---|---|---|---|---|---|---|---|---|---|
| | | $R_{2.5C}$ | $R_{5C}$ | $R_{7.5C}$ | $R_{10C}$ | Portion A | Portion B | Portion C | Average |
| Embodiment 2 | 0.70 | 12.3 | 12.6 | 12.7 | 13.6 | 0.38 | 0.33 | 0.31 | 0.34 |
| Embodiment 3 | 0.65 | 10.9 | 10.8 | 10.9 | 11.0 | 0.48 | 0.55 | 0.55 | 0.53 |

As Table 5 shows, the lithium ion secondaries battery in embodiment 2 are capable of discharging for 10 seconds even with 10 C of discharging current. The concentration of lithium salt at that time is 0.34 mol/liter, which is not less than 0.3 mol/liter.

Further, the lithium ion secondary batteries in embodiment 3 show that their discharging resistances for 2.5 C to 10 C are almost the same value each other within tolerable measuring error showing excellent discharging performance compared with those in embodiment 2. The concentration of the lithium salt at that time is 0.53 mol/liter, which is not less than 0.5 mol/liter.

<Cyclic Test 3>

The charging and discharging cyclic test is conducted on two lithium ion secondary batteries picked up separately from those batteries in embodiments 3 and 4, for which their battery capacities at the 0-hour in the cyclic test have been measured. The condition s for said cyclic test are the same as those in cyclic test 1 except the time duration of 700 hours instead.

Each one lithium ion secondary battery severally out of said two batteries in the above-described group of batteries, for which cyclic test 3 are completed, is measured for its discharging performance in the same manner as that in cyclic test 1. The other one lithium ion secondary battery in the above-described two batteries, of which cyclic test 3 are completed, is measured for the concentration of $LiPF_6$ in the nonaqueous electrolyte of said lithium ion secondary battery in the same manner that is used in cyclic test 1.

Table 6 gives aspects of each lithium ion secondary battery examined in embodiments 3 and 4, i.e. the workable capacity of the cathode (or anode) for the unit area of the cathode-to-anode facing; the discharging resistance (R) at the end of cyclic test 3; and the concentration of lithium salt in the nonaqueous electrolyte at each portion together with their average.

TABLE 6

| | Cathode* Anode Workable Capacity (mAh/cm$^2$) | Discharging Resistance (mΩ) | | | | Lithium salt Concentration (mol/liter) | | | |
|---|---|---|---|---|---|---|---|---|---|
| | | $R_{2.5C}$ | $R_{5C}$ | $R_{7.5C}$ | $R_{10C}$ | Portion A | Portion B | Portion C | Average |
| Embodiment 3 | 0.65 | 12.6 | 12.7 | 12.9 | 13.4 | 0.30 | 0.33 | 0.30 | 0.31 |
| Embodiment 4 | 0.60 | 11.5 | 11.4 | 11.6 | 11.6 | 0.65 | 0.56 | 0.62 | 0.61 |

As Table 6 shows, the lithium ion secondary batteries in embodiment 3 are capable of discharging for 10 seconds even with 10 C of discharging current. The concentration of the lithium salt at that time is 0.31 mol/liter, which is not less than 0.3 mol/liter.

Further, the lithium ion secondary batteries in embodiment 4 show that their discharging resistances for 2.5 C to 10 C are almost the same value each other within tolerable measuring error showing excellent discharging performance compared with those in embodiment 3. The concentration of lithium salt at that time is 0.61 mol/liter, which is not less than 0.5 mol/liter.

<Cyclic Test 4>

The charging and discharging cyclic test is conducted for 700 hours on two lithium ion secondary batteries picked up separately from those batteries in embodiment 1, embodiment 2, comparative example 1, and comparative example 2, for which their battery capacities have been measured. The cyclic test for said two batteries is composed of a charging and discharging pattern: discharging for 10 seconds with a current equivalent to 10 C to the battery capacity and charging for 10 seconds with a current equivalent to 10 C under substantial absence of open-circuit period. The cyclic test is performed at room temperature.

The battery voltage at the start of testing is determined within the range of 3.70 V to 3.75 V and the boundary voltage during the cyclic test is set at 4.2 V for the upper limit and 2.7 V for the lower limit. The testing stage is switched into the discharging stage when the battery voltage reaches 4.2 V while charging even before the 10 seconds of charging time elapses. Likewise, the testing stage is switched into the charging stage when the battery voltage reaches 2.7 V while discharging even before the 10 seconds of discharging time elapses. About every 100 hours, regulating charging or discharging is applied with 1 C of current so that the battery voltage may be maintained within the range of 3.70 V to 3.75 V. The cyclic test in said charging and discharging pattern resumes immediately after this regulating charging or discharging completes.

Each one lithium ion secondary battery severally out of said two batteries in the above-described group of batteries, for which cyclic test 4 are completed, is measured for its discharging performance in the same manner as that in cyclic test 1. The other one lithium ion secondary battery in the above-described two batteries, of which cyclic test 4 are completed, is measured for the concentration of $LiPF_6$ in the nonaqueous electrolyte of said lithium ion secondary battery in the same manner that is used in cyclic test 1.

Table 7 gives aspects of each lithium ion secondary battery examined in embodiments 1 and 2, and comparative examples 1 and 2, i.e. the workable capacity of the cathode (or anode) for the unit area of cathode-to-anode facing; the discharging resistance (R) at the end of cyclic test 1; and the concentration of lithium salt in the nonaqueous electrolyte at each portion together with their average.

TABLE 7

| | Cathode* Anode Workable Capacity (mAh/cm$^2$) | Discharging Resistance (mΩ) | | | | Lithium salt Concentration (mol/liter) | | | |
|---|---|---|---|---|---|---|---|---|---|
| | | $R_{2.5C}$ | $R_{5C}$ | $R_{7.5C}$ | $R_{10C}$ | Portion A | Portion B | Portion C | Average |
| Embodiment 1 | 0.75 | 15.6 | 15.8 | 16.3 | 17.1 | 0.48 | 0.44 | 0.43 | 0.45 |
| Embodiment 2 | 0.70 | 11.3 | 11.3 | 11.4 | 11.4 | 0.68 | 0.75 | 0.73 | 0.70 |
| Compar. Ex. 1 | 0.80 | 16.6 | 17.2 | 18.5 | - | 0.23 | 0.23 | 0.28 | 0.25 |
| Compar. Ex. 2 | 0.80 | 20.6 | 21.1 | 22.2 | - | 0.24 | 0.26 | 0.27 | 0.26 |

As Table 7 clearly shows, the battery voltages in a 10 C discharging of the lithium ion secondary batteries in comparative examples 1 and 2 reach the lower limit voltage of 2.7 V for discharging before 10 seconds of the discharging time elapses. The concentration of lithium salt at such stage are all less than 0.3 mol/liter for comparative examples 1 and 2, wherein the concentration of the lithium salt in the electrolyte when filled was 1.0 mol/liter and 2.0 mol/liter respectively.

In contrast to this, the lithium ion secondary batteries in embodiment 1 are capable of discharging for 10 seconds even with 10 C of discharging current, which shows an excellent discharging performance compared with those in comparative examples 1 and 2. The concentration of lithium salt at that time is 0.45 mol/liter, which is not less than 0.3 mol/liter.

Further, the lithium ion secondary batteries in embodiment 2 show that their discharging resistances for 2.5 C to 10 C are almost the same value each other within tolerable measuring error representing excellent discharging performance compared with those in embodiment 1. The concentration of lithium salt at that time is 0.70 mol/liter, which is not less than 0.3 mol/liter.

<Cyclic Test 5>

The charging and discharging cyclic test is conducted for 700 hours on two lithium ion secondary batteries picked up separately from those batteries in embodiment 1, embodiment 2, comparative example 1, and comparative example 2, for which their battery capacities have been measured. The cyclic test for said two batteries is composed of a charging and discharging pattern: discharging for 20 seconds with a current equivalent to 5 C to the battery capacity and charging for 10 seconds with a current equivalent to 10 C under substantial absence of open-circuit period. The cyclic test is performed at room temperature.

The battery voltage at the start of testing is determined within the range of 3.65 V to 3.70 V and the boundary voltage during the cyclic test is set at 4.2 V for the upper limit and 2.7 V for the lower limit. The testing stage is switched into the discharging stage when the battery voltage reaches 4.2 V while charging even before the 10 seconds of charging time elapses. Likewise, the testing stage is switched into the charging stage when the battery voltage reaches 2.7 V while discharging even before the 10 seconds of discharging time elapses. About every 100 hours, regulating charging or discharging is applied with 1 C of current so that the battery voltage may be maintained within the range of 3.65 V to 3.70 V. The cyclic test in said charging and discharging pattern resumes immediately after this regulating charging and discharging completes.

Each one lithium ion secondary battery severally out of said two batteries in the above-described group of batteries, for which cyclic test 5 are completed, is measured for its discharging performance in the same manner as that in cyclic test 1. The other one lithium ion secondary battery in the above-described two batteries, of which cyclic test 5 are completed, is measured for the concentration of $LiPF_6$ in the nonaqueous electrolyte of said lithium ion secondary battery in the same manner that is used in cyclic test 1.

Table 8 gives aspects of each lithium ion secondary battery examined in embodiments 1 and 2 and comparative examples 1 and 2, i.e. the workable capacity of the cathode (or anode) for the unit area of cathode-to-anode facing; the discharging resistance (R) at the end of cyclic test 1; and the concentration of lithium salt in the nonaqueous electrolyte at each portion together with their average.

TABLE 8

| | Cathode* Anode Workable Capacity (mAh/cm$^2$) | Discharging Resistance (mΩ) | | | | Lithium salt Concentration (mol/liter) | | | |
|---|---|---|---|---|---|---|---|---|---|
| | | $R_{2.5C}$ | $R_{5C}$ | $R_{7.5C}$ | $R_{10C}$ | Portion A | Portion B | Portion C | Average |
| Embodiment 1 | 0.75 | 14.9 | 14.8 | 14.8 | 15.4 | 0.47 | 0.50 | 0.49 | 0.49 |
| Embodiment 2 | 0.70 | 13.1 | 13.3 | 13.1 | 13.1 | 0.85 | 0.90 | 0.88 | 0.88 |
| Compar. Ex. 1 | 0.80 | 15.5 | 15.9 | 16.9 | - | 0.23 | 0.28 | 0.27 | 0.26 |
| Compar. Ex. 2 | 0.80 | 19.4 | 20.0 | 21.1 | - | 0.30 | 0.29 | 0.28 | 0.29 |

As Table 8 clearly shows, the battery voltages in a 10 C discharging of the lithium ion secondary batteries in comparative examples 1 and 2 reach the lower limit voltage of 2.7 V for discharging before 10 seconds of the discharging time elapses. The concentration of lithium salt at such stage are all less than 0.3 mol/liter for comparative examples 1 and 2, wherein the concentration of lithium salt in the electrolyte when filled was 1.0 mol/liter and 2.0 mol/liter respectively.

In contrast to this, the lithium ion secondary batteries in embodiment 1 are capable of discharging for 10 seconds even with 10 C of discharging current, which shows an excellent discharging performance compared with those in comparative examples 1 and 2. The concentration of lithium salt at that time is 0.49 mol/liter, which is not less than 0.3 mol/liter.

Further, lithium ion secondary batteries in embodiment 2 show that their discharging resistances for 2.5 C to 10 C are almost the same value each other within tolerable measuring error representing excellent discharging performance compared with those embodiment 1. The concentration of the lithium salt at that time is 0.88 mol/liter, which is not less than 0.5 mol/liter.

The procedure in the cyclic test which has a repetition of a pattern comprised of either heavy load charging or heavy load discharging, or both, would cite such as:

300 hours of cyclic repetition of 10 seconds of discharging with an hour rate of 10 C followed by 20 seconds of charging with an hour rate of 5 C being given substantial absence of subsequent period of open circuit;

700 hours of cyclic repetition of 10 seconds of discharging with an hour rate of 10 C followed by 20 seconds of charging with an hour rate of 5 C being given substantial absence of subsequent period of open circuit;

1500 hours of cyclic repetition of 10 seconds of discharging with an hour rate of 10 C followed by 20 seconds of charging with an hour rate of 5 C being given substantial absence of subsequent period of open circuit;

700 hours of cyclic repetition of 10 seconds of discharging with an hour rate of 10 C followed by 10 seconds of charging with an hour rate of 10 C being given substantial absence of subsequent period of open circuit; and

700 hours of cyclic repetition of 20 seconds of discharging with an hour rate of 5 C followed by 10 seconds of charging with an hour rate of 10 C being given substantial absence of subsequent period of open circuit.

The means for ensuring the concentration of the lithium salt in the nonaqueous electrolyte of being not less than 0.3 mol/liter and not more than 3.0 mol/liter, preferably not less than 0.5 mol/liter and not more than 3.0 mol/liter, is, for example, to make the workable capacity of the cathode, or the workable capacity of the anode, for the unit area of cathode-to-anode facing to be not more than 0.75 mAh/cm$_2$ and not less than 0.30 mAh/cm$^2$.

**Claims**

1. A lithium ion secondary battery having a cathode, an anode, a separator, a lithium salt that supplies at least lithium ion, and a nonaqueous electrolyte that includes said lithium salt ; wherein the concentration of said lithium salt in said nonaqueous electrolyte of said lithium ion secondary battery is between 0.3 mol/liter and 3.0 mol/liter after conducting a 300 hours of cyclic test of charging and discharging on said lithium ion secondary battery (in which charging and discharging condition is: a. 10 seconds of discharging with 10 C of hour rate (Rate), + b. 20 seconds of charging with 5 C of hour rate (Rate), + c. giving substantial absence of open circuit period).

2. A lithium ion secondary battery according to claim 1, wherein a cyclic test of charging and discharging on said lithium ion secondary battery are 700 hours.

3. A lithium ion secondary battery according to claim 1, wherein a cyclic test of charging and discharging on said lithium ion secondary battery are 1500 hours.

4. A lithium ion secondary battery having a cathode, an anode, a separator, a lithium salt that supplies at least lithium ion, and a nonaqueous electrolyte that includes said lithium salt ; wherein the concentration of said lithium salt in said nonaqueous electrolyte of said lithium ion secondary battery is between 0.3 mol/liter and 3.0 mol/liter after conducting a 700 hours of cyclic test of charging and discharging on said lithium ion secondary battery (in which charging and discharging condition is: a. 10 seconds of discharging with 10 C of hour rate (Rate), + b. 10 seconds of charging with 10 C of hour rate (Rate), + c. giving substantial absence of open circuit period).

5. A lithium ion secondary battery having a cathode, an anode, a separator, a lithium salt that supplies at least lithium ion, and a nonaqueous electrolyte that includes said lithium salt ; wherein the concentration of said lithium salt in said nonaqueous electrolyte of said lithium ion secondary battery is between 0.3 mol/liter and 3.0 mol/liter after conducting a 700 hours of cyclic test of charging and discharging on said lithium ion secondary battery (in which charging and discharging condition is: a. 20 seconds of discharging with 5 C of hour rate (Rate), + b. 10 seconds of charging with 10 C of hour rate (Rate), + c. giving substantial absence of open circuit period).

6. A lithium ion secondary battery according to claim 1, wherein the concentration of said lithium salt in said nonaqueous electrolyte is between 0.5 mol/liter and 3.0 mol/liter.

7. A lithium ion secondary battery according to claim 1, wherein a workable capacity of said cathode is between 0.30 mAh/cm$^2$ and 0.75 mAh/cm$^2$ for the unit area of cathode-to-anode facing.

8. A lithium ion secondary battery according to claim 1, wherein a workable capacity of said anode is between 0.30 mAh/cm$^2$ and 0.75 mAh/cm$^2$ for the unit area of cathode-to-anode facing.

## FIG. 1

## FIG. 2